# EUROPEAN PATENT SPECIFICATION

(11) **EP 1 957 370 B1**
(45) Date of publication and mention of the grant of the patent: **25.12.2013**
(21) Application number: 06812992.3
(22) Date of filing: 09.11.2006
(51) Int. Cl.: B65B 31/04, B65G 69/20, B65B 55/18

(54) **A METHOD AND AN APPARATUS FOR FILLING OF PACKAGES**
VERFAHREN UND VORRICHTUNG ZUR FÜLLUNG VON PAKETEN
PROCEDE ET APPAREIL DE REMPLISSAGE D'EMBALLAGES

(30) Priority: 24.11.2005 SE 0502576
(43) Date of publication of application: 20.08.2008
(73) Proprietor: Tetra Laval Holdings & Finance S.A., 1009 Pully (CH)
(72) Inventor: MÅNSSON, Carl-Erik, 241 91 Eslöv (SE); HELLSTRÖM, Hans, 240 13 Genarp (SE); PERSSON, Bertil, 240 14 Veberöd (SE); JARTELIUS, Monica, 212 42 Malmö (SE)
(74) Representative: Forsberg, Lars-Ake
(86) International application number: PCT/SE2006/001269
(87) International publication number: WO 2007/061354

(56) References cited:
- WO-A1-95/31375
- DE-A1- 2 612 958
- DE-A1- 3 108 817
- US-A1- 2 917 880
- US-A1- 5 896 727
- PATENT ABSTRACTS OF JAPAN vol. 10, no. 023 29 January 1986 & JP 60 175 541 A (SHIYOUWA TANSAN KK) 09 September 1985

## Description

### TECHNICAL FIELD

The present invention relates to a method of reducing the proportion of oxygen in an at least partly formed package before product is filled into said package in a filling station in a filling machine. Said package comprises a tube-shaped blank of packaging material, the blank being sealed in a first end and open in a second end.

### BACKGROUND ART

Within the food industry, it is common practice to pack drinks and other products with a higher viscosity in packages produced from laminates of paper and plastic. In many cases, the packaging laminates also include an oxygen gas barrier such as, for example, an aluminium foil, in order to make it possible to achieve a longer shelf-life for oxygen-sensitive products, in particular fruit juices.

One common package type is produced in a filling machine in that flat-laid, tube-shaped packaging blanks are raised and sealed in their one end, either by folding and sealing of the end region or in that a top of plastic is injection moulded direct on the end region. The package is subsequently transported with its open end directed upwards and is filled in a subsequent filling station. In certain cases, the package also passes a sterilisation station before the filling operation. After the filling, the package is folded and sealed. The applicant markets these types of packages under the trademarks Tetra Top® and Tetra Rex®.

In almost all long-term packing of food products, the quantity of oxygen gas in the filled and sealed package is a crucial question. Many foods may be damaged if there is an abundance of oxygen gas in the package, or if oxygen gas can penetrate into the package during storage. In order to minimise the quantity of oxygen gas in the sealed package, it is, therefore, common practice to attempt to replace the air in the gas volume, normally called the "head space", before the package is closed and sealed. The gas volume is that part of the package which is not filled with product. One common method of reducing the quantity of oxygen gas in the gas volume is to blow in an inert gas, preferably nitrogen gas, into the open end of the package immediately after filling, but before the package is sealed. This process is normally called "head space flushing". The air uppermost in the package, in the region above the level of the product, is thereby forced out and replaced by nitrogen gas which does not react with the product. Such a method is described, for example, in the applicant's own international patent publication carrying serial number WO 2004/039677. A similar solution is disclosed in U.S. Patent No. 5,896,727.

For the same reason, it is also known in the art to maintain nitrogen gas-rich ambient surroundings around the filling station before, during and after fillings. In this sense DE 26 12 958 is known. An other solution is described int. al. in U.S. Patent No. 2,917,880 where the air in the package is first sucked out through a nozzle which is placed over the open end of the package. Thereafter, nitrogen gas is blown in and the filling is commenced. U.S. Patent No. 3,477,192 disclosed another solution where a hood is placed over the filling station, the hood being largely filled with nitrogen gas in order to minimise the quantity of oxygen which accompanies the contents down into the packages on filling, and reduces frothing of the product. Further, U.S. Patent No. 4,870,801 describes an advanced system for supplying, in different stages, inert gas or liquid into packages before and/or after filling in order to reduce the quantity of oxygen in the finished package. These solutions display the drawback that they require considerable, and in certain cases also complicated, equipment. Similarly, one or more process steps are required for the aspiration of the nitrogen gas, i.e. the package is indexed up to and from special gassing stations, which takes time. The solution involving a hood as disclosed in U.S. Patent No. 3,477,192 moreover requires a considerable quantity of nitrogen gas. Taken as a whole, these prior art solutions are relatively costly.

### BRIEF SUMMARY OF THE INVENTION

One object of the present invention is to realise a method of rapidly and simply at least partly filling a package with inert gas before product filling is commenced, with a view to reducing the quantity of oxygen gas in the finished package. A further object of the present invention is also to employ as little inert gas as possible.

These objects are attained according to the present invention by means of a method which is characterised by the steps that the package, during transport to said filling station from the immediately preceding station in the filling machine, passes beneath supply means for inert gas, and that, when the package passes said supply means, a gas pulse is realised in a direction down into said package. By such means, the air in the package is replaced by inert gas which remains in the package during the filling cycle. The filling normally gives rise to the formation of bubbles and froth in the product, and these bubbles migrate slowly upwards in the product and reach the gas volume uppermost in the package. These bubbles are normally not accessed by "head space flushing" since the bubbles take a while to reach the surface and, as a result, have not reached the gas volume when this "flushing" takes place. If, hence, there is air in the package on filling, the bubbles naturally contain air and thereby also oxygen gas. This oxygen gas does not have time to be flushed out but remains in the package. By instead ensuring that the package largely contains nitrogen gas on filling, the bubbles thus formed contain this gas instead. As a result, the subsequent "head space flushing" stage will be more effective.

By discharging the gas in pulses, gas is consumed only when a package is located beneath the supply means, which is extremely economical.

According to one preferred embodiment, the method includes the step of passing the supply means in the indexing step which is terminated when the package is located in the filling station.

Further, the method according to the present invention preferably includes the step of commencing said gas pulse when a first edge of the package substantially lies flush with the supply means so that the gas may be caused to flow along a first inner side of the package. By such means, it will be easier to evacuate the air which is located in the package, and this does not run the risk of remaining in the bottom of the package.

Preferably, the method according to the present invention further includes the step of at the latest terminating said gas pulse when a second edge of the package lies substantially flush with the supply means, this step is so as not to waste any gas unnecessarily.

According to one preferred embodiment of the method, this includes the step of disposing the supply means on or in the proximity of the filler pipe in such a manner that the package is caused to pass the supply means before passing the filler pipe. It is a very simple method to dispose the supply means in the filling machine, and its positioning requires no extra indexing step, and thereby takes up no extra processing time.

According to one preferred embodiment, the method according to the invention comprises one step of employing an inert gas in the form of nitrogen gas, and one step of supplying the gas at a first velocity through a first inner nozzle in the supply means and at a second, lower velocity through a second surrounding outer nozzle. At high flow rates, eddies or currents are formed which "suck" in ambient gas. By ensuring that the ambient gas is the same gas as that in the high flow rate, it is possible to prevent ambient air from being sucked down into the package. After all, the gas which is sucked down will instead come from the outer nozzle and it is that gas which is intended to get down into the package.

The present invention also relates to an apparatus which includes supply means for an inert gas, the supply means being placed in the indexing direction in the area between said filling station and the immediately preceding station in the filling machine. Said supply means are disposed to initiate a gas pulse in a direction down into the package when said package passes beneath the supply means during transport to the filling station from the immediately preceding station.

One currently preferred embodiment of the apparatus according to the present invention is described in the appended dependent claims.

### BRIEF DESCRIPTION OF THE ACCOMPANYING DRAWINGS

The present invention will now be described in greater detail hereinbelow, with the aid of one currently preferred embodiment which is shown in the accompanying Drawings. In the accompanying Drawings:
Fig. 1 schematically illustrates a number of stations included in a filling machine, as well as packages in a conveyor;
Fig. 2 schematically shows a view, partly in section, of the supply means and a package (which is in motion);
Fig. 3 schematically shows a cross section through the supply means; and
Fig. 4 schematically shows an isometric view of a part of the supply means.

It should be observed that the figures are not according to scale.

### DETAILED DESCRIPTION OF ONE EMBODIMENT

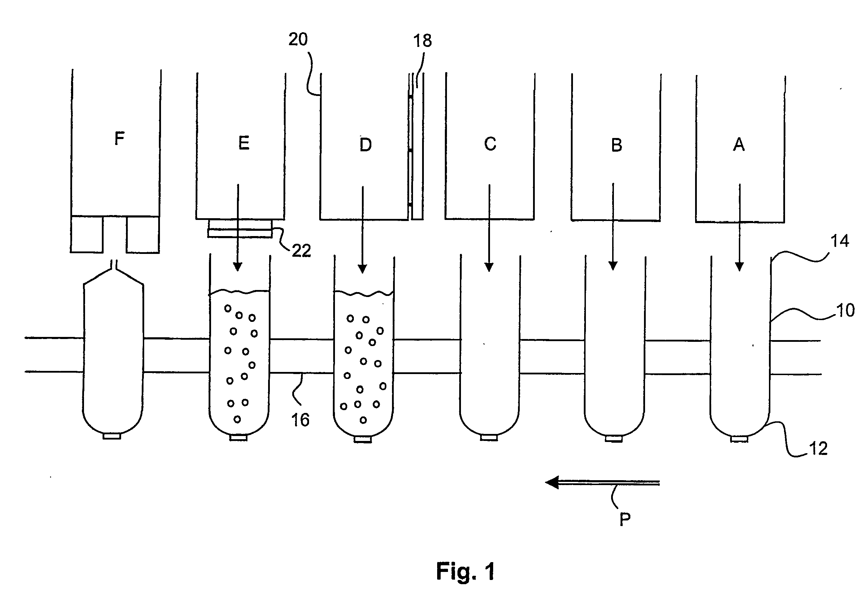

Fig. 1 shows a number of stations A-F which are included in a part of a filling machine. At least partly formed packages, which are hereby given reference numeral 10, arrive at station A. In the described embodiment, these packages are ready for filling. Normally, they are called "ready-to-fill" packages. In this case, the package 10 consists of blank of packaging laminate which has been reformed into a sleeve and sealed into a tube form, and which has been sealed at a first end 12. This sealing has been put into effect in that a packaging top with an opening arrangement or device has been injection moulded on the end of the sleeve. This is a known technique and will not be described further. Alternatively, the end of the sleeve has been folded and thermosealed. A second end 14 of the package 10 is still open and it is through this opening that the package is to be filled with product in order subsequently to be sealed into a finished package. The term "tube form" is here to be interpreted broadly, i.e. all types of package cross sections are encompassed. Consequently, the package may, for example, have circular, triangular, square, rectangular or polygonal cross section. In the example described here, the cross section is square.

The square packages are placed in a conveyor 16 for indexed, i.e. stepped, displacement into the filling machine. In the conveyor 16, the packages are placed with their open end 14 most proximal the stations A-F. In the described case, the top of the package 10 is thereby directed downwards in Fig. 1.

The conveyor may be of known type and will not be described in greater detail. Between stations A-F, which each constitute a separate process stage discrete from the others, there are one or more indexing steps. The number of steps depends upon the physical distance between the stations, and this distance is normally a multiple of the distance a package is indexed at a time. For purposes of simplicity, in the described example the distance between the stations is shown as corresponding to only one indexing step, i.e. a package is indexed direct from one station to the next. In reality, there may also be a plurality of stations of each type, where either all packages are each advanced stepwise to all stations (where they are subjected to a part treatment, i.e. are filled stepwise), or where a number of packages are indexed together and, as a result, there is required a multiple of the different stations in order for all packages to receive the same processing.

Depending upon what type of package is involved, and whether or not transport and storage of the package takes place in a refrigerated or unrefrigerated environment, the package may, at this stage, be sterilised to an appropriate degree. Station A is a station is which a sterilisation agent is supplied to the package 10. In this case, the sterilisation agent consists of hydrogen peroxide (H₂O₂) in low concentration. In this application, a 1 per cent concentration is employed. The hydrogen peroxide is supplied in the gas phase with the aid of nozzles and condenses on the inside of the package. The package is then indexed one or more steps in the direction of the arrow (P) from right to left in Fig. 1, to station B. Station B is a station where one or more UV lamps are placed. The ultraviolet light is directed down into the package. Both the hydrogen peroxide and the UV lamp realise destruction of bacteria and it is known in the art that hydrogen peroxide and ultraviolet light give synergy effects in sterilisation contexts. From station B, the package is indexed to station C which is a ventilation station of known type. Here, warm, filtered clean air is blown down into the package for the purpose of ventilating off any possibly remaining hydrogen peroxide. Preferably, an air filter of the H.E.P.A. type may be employed.

The package is thereby ready to be filled with product. The package is indexed to a filling station, station D. Between this station and station C, along the indexing line, there is positioned a gas supply means 18. In the currently preferred and described example, the gas supply means 18 is placed on the filling station, more precisely secured on the filler pipe 20. Thus, the filler pipe 20 and the gas supply means 18 are substantially parallel with one another and directed towards the open package ends.

During the indexing to the filling station D, the package passes under the gas supply means 18. The term passes is here taken to signify that the package does not stop beneath said means, but is in motion. This is because the means is placed in the indexing step, or as it were "between" indexing steps. The construction and operation of the gas supply means 18 will be described later in this specification.

When the package 10 at length reaches the filling station D, and has been substantially centred beneath the filler pipe 20, filling of product into the package 10 commences. The filling station D is of known type and will not be described further. If filling takes place in steps, i.e. if a partial quantity of the product is filled into the package with the aid of a first filling station D and the remaining quantity filled with the aid of additional filling stations D, the gas supply means 18 is positioned in association with the first station D.

After the filling, the package is indexed to station E where any possible froth in the product is given the opportunity to settle somewhat. Here, a plate 22 is positioned with a nozzle a slight distance from the open end of the package. The plate 22 is preferably of approximately the same size and configuration as the opening of the package, in order approximately to serve as a "lid" over the opening. Through the nozzle, nitrogen is fed to the gas volume which is to be found above the surface of the product in the open end 14 of the package 10, i.e. a "head space flushing" is carried out. The package 10 is then indexed further to a sealing station F where an additional "head space flushing" is carried out, at the same time as the package is folded and sealed. A nozzle injects nitrogen gas in the sealing region, and any possible remaining oxygen gas is "flushed" out. The sealing proper of the end of the package may be put into effect in a conventional manner.

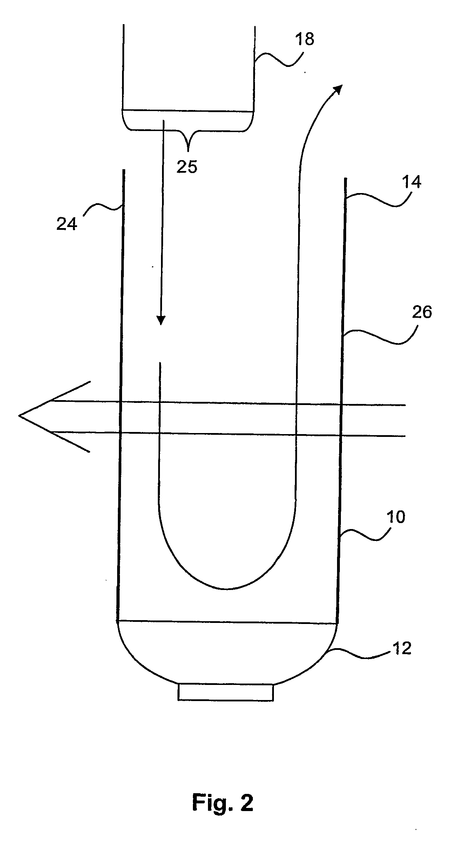

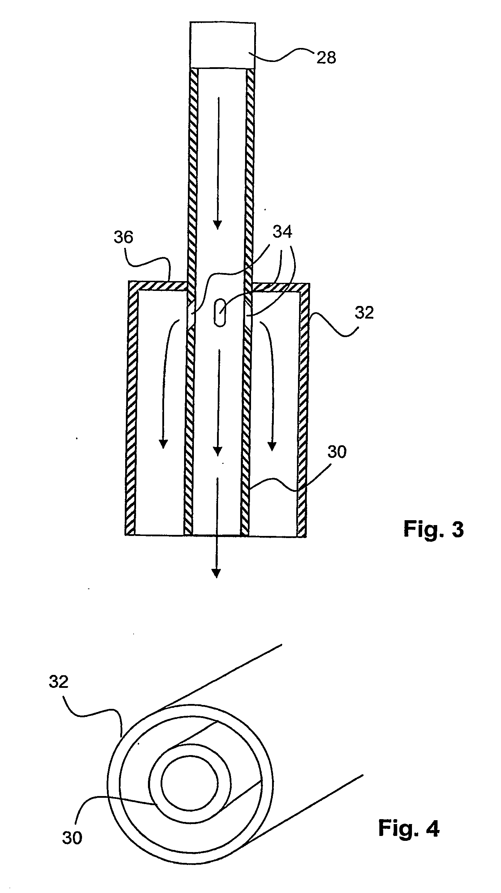

With reference to Fig. 2, the gas supply means 18 and its function will now be described in greater detail. The means 18 is operative to initiate a gas pulse when a first edge 24 of the package arrives substantially flush with the supply means 18, see Fig. 2. The means 18 is also operative to terminate the gas pulse when a second edge 26 of the package 10 arrives substantially flush with the supply means 18. The first edge 24 of the package is that edge which first passes the gas supply means 18, and the second edge 26 is that edge which passes the gas supply means 18 last. The means 18 includes devices for initiating and terminating the gas pulse. In this case, these devices consist of a valve 28, preferably a pneumatic valve, which is seen highly schematically in Fig. 3 and which is in communication with the programme controlling the filling machine. The valve 28 opens a gas flow out of the gas supply means 18 substantially when the first edge 24 passes the supply means 18, and closes the flow substantially when the second edge 26 passes. In such means, a gas pulse is formed when the package 10 passes beneath the supply means 18 and, since it is initiated already when the first edge 24 of the package 10 passes, there will be generated a gas flow substantially along or in the proximity of the inner side of the first edge. The air in the package 10 is then forced up along the opposite inner side and departs from the package. The flow is illustrated by means of single arrows in Fig. 2. The double-headed arrow illustrates the direction of movement of the package. In order to achieve a relatively high velocity of the flow, the gas is pressurised to approximately 3 bar in the system ahead of the valve 28.

It has been described that the gas pulse is initiated when the supply means 18 "substantially arrives flush with" the first edge 24 of the package. Seen in the indexing direction, this implies that the pulse may start either just before the edge 24 passes into the contemplated operative area 25 of the supply means (where the gas is disposed to flow), or when the edge is located somewhere within the operative area 25 of the means, or when the edge 24 exactly passes into the operative area 25 of the means or just after the edge 24 has passed out of the operative area 25 of the supply means. In order to obtain a highly effective pulse and not consume more gas than necessary, it is to be preferred if the gas pulse is discharged when the edge 24 of the package just passes out of the operative area 25 of the supply means, see Fig. 2. The pulse is terminated when the supply means 18 "substantially arrives flush with" the second edge 26 of the package. This implies, seen in the indexing direction, that the pulse may be terminated either when the edge 26 has not yet passed into the operative area 25 of the supply means, or when the edge 26 precisely passes into the operative area 25, or when the edge 26 is located somewhere within the operative area 25 of the supply means, or when the edge 26 has passed the operative area 25 of the supply means. It is to be preferred if the pulse is terminated when the edge 26 precisely passes into the operative area 25, by such means no gas is wasted unnecessarily.

The gas is inert and, in the described example, use is made of nitrogen gas of accepted food quality. The valve 28 is in communication with a nitrogen gas source (not visible).

Naturally, the pulse may be of longer or shorter duration in time than that described, if so desired. However, it is desirable that as little nitrogen gas is wasted outside the package 10 as possible. The start and length of the gas pulse is programmed in the machine, i.e. the filling machine is programmed to "know" when a package 10 passes under the supply means 18. One alternative is to provide some form of sensor which senses the first and second edge 24 and 26 and which communicates with the valve 28.

Below the valve 28, the supply means 18 consists of a first inner nozzle 30 and a second, surrounding outer nozzle 32, see Fig. 3 and 4. Consequently, the inner nozzle 30 is placed in the outer nozzle 32 and is disposed to supply gas at a first velocity. The outer nozzle 32 is disposed to supply gas at a second, lower velocity. The difference in velocity is realised in that there is at least one passage 34 between the inner nozzle 30 and the outer nozzle 32 where gas from the inner nozzle may exist into the outer nozzle and thence further out of the supply means 18. Both of the nozzles 30, 32 are tubular, and the inner nozzle has a smaller diameter than the outer. In its one end, the inner nozzle 30 is in communication with the valve 28 and the gas may rush straight through the nozzle 30 and out through its free end, i.e. the mouth of the nozzle. However, a small proportion of the gas exists through the above-mentioned passages 34 instead. The passages 34 are foraminations or holes through the wall of the inner nozzle a distance from the mouth. The holes are preferably obliquely outwardly and downwardly directed. Preferably, a plurality of holes are uniformly distributed about the periphery of the tube in order to afford a uniform flow of gas out in the outer nozzle 32. The outer nozzle is not in communication with the valve 28, but, as was mentioned above, receives its supply of gas through the holes 34. Said holes 34 discharge in an upper region of the outer nozzle 32, and the gas flows downwards in the tube towards its mouth which is located on the same height as the mouth of the inner nozzle. The opposite end of the outer nozzle is closed by means of a wall 36.

Both of the mouths of the inner and outer nozzle 30 and 32, respectively, are located in a direction towards the open end of the package.

Hence, the function of the gas supply means 18 will be as follows: When the package 10 is conveyed to the filling station D from the immediately preceding station, which in this case is station C, it passes under the supply means 18. At that instant when the first edge 24 of the package 10 substantially arrives flush with the supply means 1, the valve 28 is opened and a gas pulse is initiated through the supply means 18. The gas may flow along the inside of the package 10 and force out the air from the package 10. As soon as the second edge 26 passes the supply means 18, the pulse is terminated in that the valve 22 shuts off the gas flow. The package has then completely passed the supply means 18 and stopped in the filling station, where the filling commences.

If there is more than one indexing step between station C and D, the gas supply means should be positioned so that it is passed in the indexing step which is terminated by the package 10 being located in station D.

The present invention has been described in the foregoing with the aid of one currently preferred embodiment. However, it should be understood that the present invention is not restricted to this embodiment, but that numerous variations and modifications are possible without departing from the scope of the appended Claims. It has been described that the gas which is employed is to be inert so as not to react with the product in the package. However, there are practical applications where it is desirable to use gas which is to neutralise substances which the product may emit. The effect which it is intended to achieve is thereby substantially the same. It should be observed that also this type of gas is incorporated in the term "inert gas", even though it is not inert in the true sense.

## Claims

1. A method of reducing the proportion of oxygen in an at least partly formed package (10) before product is filled into said package (10) in a filling station (D) in a filling machine, where said package (10) comprises a tub-formed blank of packaging material, the blank being closed in a first end (12) and open in a second end (14), the method comprising the steps of:
causing, during the transport of the package (10) to said filling station (D) from an immediately preceding station in the filling machine, the package (10) to pass beneath supply means (18) for inert gas, and
generating, when the package (10) passes said supply means (18) in an indexing step which is terminated by a package (10) being located in the filling station (D), a gas pulse in a direction down into said package (10), wherein the method further comprises the steps of commencing said gas pulse when a first edge (24) of the package (10) substantially arrives flush with the supply means (18) so that the gas may be caused to flow along a first inner side of the package (10), and
the step of preferably terminating said gas pulse when a second edge (26) of the package (10) substantially arrives flush with the supply means (18).

2. The method as claimed in Claim 1, **characterised in that** it includes the step of disposing the supply means (18) on or in the proximity of the filler pipe (20) in such a manner that the package (10) is caused to pass the supply means (18) before passage of the filler pipe (20).

3. The method as claimed in Claim 1, **characterised in that** it includes the step of employing an inert gas in the form of nitrogen gas.

4. The method as claimed in Claim 1, **characterised in that** it includes the step that the gas is supplied at a first velocity through a first inner nozzle (30) of the supply means (18) and at a second, lower velocity through a second surrounding outer nozzle (32).

5. Filling machine including a filling station and an apparatus for reducing the proportion of oxygen in an at least partly formed package (10) before product is filled into said package (10) in the filling station (D), the package (10) comprising a tube-shaped blank of packaging material, the blank being closed in a first end (12) and open in a second end (14), **characterised in that**
the apparatus includes supply means (18) for an inert gas, said supply means (18) being placed in the indexing direction in the region between said filling station (D) and an immediately preceding station in the filling machine; and
that said supply means (18) is adapted to initiate a gas pulse in a direction down in the package (10) when said package (10) passes beneath the supply means (18) during transport to the filling station (D) from an immediately preceding station, wherein
said supply means (18) is disposed such that said package (10) passes beneath the supply means (18) **in that** indexing step which is terminated by the package (10) being located in the filling station (D),
wherein the apparatus further includes means (28) for initiating the gas pulse when a first edge (24) of the package (10) arrives substantially flush with the supply means (18) so that the gas may be caused to flow along a first inner side of the package (10), and for terminating the gas pulse when a second edge (26) of the package substantially arrives flush with the supply means (18).

6. The apparatus as claimed in Claim 5, **characterised in that** said immediately preceding station is a sterilisation station which, in the indexing direction, includes a station (A) for the supply of a sterilisation agent, a station (B) for the supply of UV light, and a station (C) for the supply of hot air for ventilating out residues of the sterilisation agent.

7. The apparatus as claimed in Claim 5, **characterised in that** said supply means (18) includes a first inner nozzle (30) and a second, surrounding outer nozzle (32), where the inner nozzle (30) is disposed to supply gas at a first velocity, and where the outer nozzle (32) is disposed to supply gas at a second, lower velocity.

8. The apparatus as claimed in Claim 7, **characterised in that** both of the nozzles (30, 32) are tubular, that the inner nozzle (30) is provided with at least one throughgoing hole (34) a distance from the mouth of the inner nozzle, and that a part of the gas which flows through the inner nozzle (30) flows through the hole to the outer nozzle (32) and departs from the supply means (18) through the mouth of the outer nozzle.

9. The apparatus as claimed in Claim 5, **characterised in that** the supply means (18) is disposed on or in the proximity of the filler pipe (20) in such a manner that the package (10) is caused to pass the supply means (18) before passing the filler pipe (20).

10. The apparatus as claimed in Claim 5, **characterised in that** the gas is nitrogen gas.

## Patentansprüche

1. Verfahren zum Reduzieren des Sauerstoffanteils in einer mindestens teilweise geformten Verpackung (10), bevor das Produkt in einer Füllstation (D) in einer Füllmaschine in die Verpackung (10) gefüllt wird, wobei die Verpackung (10) einen rohrförmigen Rohling aus Verpackungsmaterial umfasst, wobei der Rohling an einem ersten Ende (12) geschlossen ist und an einem zweiten Ende (14) geöffnet ist, wobei das Verfahren die folgenden Schritte umfasst:
Bewirken, während des Transports der Verpackung (10) zu der Füllstation (D) von einer unmittelbar vorausgehenden Station in der Füllmaschine, dass die Verpackung (10) unterhalb des Zufuhrmittels (18) für Inertgas geleitet wird, und
Erzeugen, wenn die Verpackung (10) das Zufuhrmittel (18) in einem Indexierschritt durchläuft, der von einer Verpackung (10) beendet wird, die in der Füllstation (D) angeordnet ist, eines Gasimpulses in eine Richtung nach unten in die Verpackung (10), wobei das Verfahren ferner die Schritte des Beginnens des Gasimpulses umfasst, wenn ein erster Rand (24) der Verpackung (10) im Wesentlichen bündig mit dem Zufuhrmittel (18) eintrifft, sodass das Gas zum Strömen entlang einer ersten Innenseite der Verpackung (10) veranlasst werden kann, und
den Schritt des vorzugsweise Beendens des Gasimpulses, wenn ein zweiter Rand (26) der Verpackung (10) im Wesentlichen bündig mit dem Zufuhrmittel (18) eintrifft.

2. Verfahren nach Anspruch 1, **dadurch gekennzeichnet, dass** es den Schritt des derartigen Anordnens des Zufuhrmittels (18) auf oder in der Nähe des Füllrohrs (20), dass die Verpackung (10) zum Durchlaufen des Zufuhrmittels (18) vor Durchlaufen des Füllrohrs (20) veranlasst wird, beinhaltet.

3. Verfahren nach Anspruch 1, **dadurch gekennzeichnet, dass** es den Schritt des Einsetzens eines Inertgases in Form von Stickstoffgas beinhaltet.

4. Verfahren nach Anspruch 1, **dadurch gekennzeichnet, dass** es einen Schritt beinhaltet, in dem Gas bei einer ersten Geschwindigkeit durch eine erste Innendüse (30) des Zufuhrmittels (18) und bei einer zweiten, niedrigeren Geschwindigkeit durch eine zweite umgebende Außendüse (32) zugeführt wird.

5. Füllmaschine, die eine Füllstation und eine Vorrichtung zum Reduzieren des Sauerstoffanteils in einer mindestens teilweise geformten Verpackung (10) aufweist, bevor das Produkt in der Füllstation (D) in die Verpackung (10) gefüllt wird, wobei die Verpackung (10) einen rohrförmigen Rohling aus Verpackungsmaterial umfasst, wobei der Rohling an einem ersten Ende (12) geschlossen ist und an einem zweiten Ende (14) geöffnet ist,
**dadurch gekennzeichnet, dass**
die Vorrichtung ein Zufuhrmittel (18) für ein Inertgas aufweist, wobei das Zufuhrmittel (18) in der Indexierrichtung in dem Bereich zwischen der Füllstation (D) und einer unmittelbar vorhergehenden Station in der Füllmaschine angeordnet ist; und
das Zufuhrmittel (18) ausgelegt ist, um einen Gasimpuls in eine Richtung nach unten in die Verpackung (10) einzuleiten, wenn die Verpackung (10) während des Transports zu der Füllstation (D) von einer unmittelbar vorhergehenden Station unterhalb des Zufuhrmittels (18) geleitet wird, wobei
das Zufuhrmittel (18) derart angeordnet ist, dass die Verpackung (10) unterhalb des Zufuhrmittels (18) in dem Indexierschritt geleitet wird, der von der Verpackung (10)beendet wird, die in der Füllstation (D) angeordnet ist,
wobei die Vorrichtung ferner Mittel (28) zum Einleiten des Gasimpulses aufweist, wenn ein erster Rand (24) der Verpackung (10) im Wesentlichen bündig mit dem Zufuhrmittel (18) eintrifft, sodass das Gas zum Strömen entlang einer ersten Innenseite der Verpackung (10) und zum Beenden des Gasimpulses veranlasst werden kann, wenn ein zweiter Rand (26) der Verpackung im Wesentlichen bündig mit dem Zufuhrmittel (18) eintrifft.

6. Vorrichtung nach Anspruch 5, **dadurch gekennzeichnet, dass** die unmittelbar vorhergehende Station eine Sterilisationsstation ist, die in der Indexierrichtung eine Station (A) für die Zufuhr eines Sterilisationsmittels, eine Station (B) für die Zufuhr von UV-Licht und eine Station (C) für die Zufuhr von heißer Luft zum Ausblasen von Resten des Sterilisationsmittels aufweist.

7. Vorrichtung nach Anspruch 5, **dadurch gekennzeichnet, dass** das Zufuhrmittel (18) eine erste Innendüse (30) und eine zweite umliegende Außendüse (32) aufweist, wobei die Innendüse (30) zum Zuführen von Gas bei einer ersten Geschwindigkeit angeordnet ist und wobei die Außendüse (32) zum Zuführen von Gas bei einer zweiten, niedrigeren Geschwindigkeit angeordnet ist.

8. Vorrichtung nach Anspruch 7, **dadurch gekennzeichnet, dass** beide Düsen (30, 32) röhrenförmig sind, dass die Innendüse (30) mit mindestens einem Durchgangsloch (34) in einem Abstand von der Mündung der Innendüse bereitgestellt ist und dass ein Teil des Gases, das durch die Innendüse (30) strömt, durch das Loch der Außendüse (32) strömt und aus dem Zufuhrmittel (18) durch die Mündung der Außendüse austritt.

9. Vorrichtung nach Anspruch 5, **dadurch gekennzeichnet, dass** das Zufuhrmittel (18) auf oder in der Nähe des Füllrohrs (20) derart angeordnet ist, dass die Verpackung (10) zum Durchlaufen des Zufuhrmittels (18) vor Durchlaufen des Füllrohrs (20) veranlasst wird.

10. Vorrichtung nach Anspruch 5, **dadurch gekennzeichnet, dass** das Gas Stickstoff ist.

## Revendications

1. Procédé de réduction de la proportion d'oxygène présente dans un emballage (10) au moins partiellement formé avant que ledit emballage (10) soit rempli de produit à un poste (D) de remplissage dans une machine de remplissage, ledit emballage (10) comportant un ébauche en forme de tube de matériau d'emballage, l'ébauche étant fermée à une première extrémité (12) et ouverte à une deuxième extrémité (14), le procédé comportant les étapes consistant à :
provoquer, pendant le transport de l'emballage (10) jusqu'audit poste (D) de remplissage en provenance d'un poste immédiatement précédent de la machine de remplissage, le passage de l'emballage (10) sous un moyen (18) d'amenée de gaz inerte, et
générer, lorsque l'emballage (10) passe devant ledit moyen (18) d'amenée lors d'une étape d'indexage à laquelle il est mis fin par le positionnement d'un emballage (10) sur le poste (D) de remplissage, un impulsion de gaz dans une direction descendant jusque dans ledit emballage (10), le procédé comportant en outre les étapes consistant à commencer ladite impulsion de gaz lorsqu'un premier bord (24) de l'emballage (10) arrive sensiblement à la hauteur du moyen (18) d'amenée de façon à pouvoir faire s'écouler le gaz le long d'un premier côté intérieur de l'emballage (10), et
l'étape consistant de préférence à mettre fin à ladite impulsion de gaz lorsqu'un deuxième bord (26) de l'emballage (10) arrive sensiblement à la hauteur du moyen (18) d'amenée.

2. Procédé selon la revendication 1, **caractérisé en ce qu'**il comprend l'étape consistant à disposer le moyen (18) d'amenée sur ou à proximité de la conduite (20) de remplissage de manière à faire passer l'emballage (10) devant le moyen (18) d'amenée avant le passage devant la conduite (20) de remplissage.

3. Procédé selon la revendication 1, **caractérisé en ce qu'**il comprend l'étape consistant à employer un gaz inerte sous forme de gaz azote.

4. Procédé selon la revendication 1, **caractérisé en ce qu'**il comprend l'étape lors de laquelle le gaz est amené à une première vitesse à travers une première buse intérieure (30) du moyen (18) d'amenée et à une deuxième vitesse plus faible à travers une deuxième buse extérieure (32) l'entourant.

5. Machine de remplissage comprenant un poste de remplissage et un appareil de réduction de la proportion d'oxygène présente dans un emballage (10) au moins partiellement formé avant que ledit emballage (10) soit rempli de produit sur le poste (D) de remplissage, l'emballage (10) comportant une ébauche en forme de tube de matériau d'emballage, l'ébauche étant fermée à une première extrémité (12) et ouverte à une deuxième extrémité (14), **caractérisé en ce que**
l'appareil comprend un moyen (18) d'amenée d'un gaz inerte, ledit moyen (18) d'amenée étant placé dans la direction d'indexage dans la région située entre ledit poste (D) de remplissage et un poste immédiatement précédent de la machine de remplissage ; et
**en ce que** ledit moyen (18) d'amenée est prévu pour déclencher une impulsion de gaz dans une direction descendant dans l'emballage (10) lorsque ledit emballage (10) passe sous le moyen (18) d'amenée pendant le transport vers le poste (D) de remplissage en provenance d'un poste immédiatement précédent,
ledit moyen (18) d'amenée étant disposé de telle façon que ledit emballage (10) passe sous le moyen (18) d'amenée lors de ladite étape d'indexage à laquelle il est mis fin par le positionnement de l'emballage (10) sur le poste (D) de remplissage,
l'appareil comprenant en outre un moyen (28) servant à déclencher l'impulsion de gaz lorsqu'un premier bord (24) de l'emballage (10) arrive sensiblement à la hauteur du moyen (18) d'amenée de façon à pouvoir faire s'écouler le gaz le long d'un premier côté intérieur de l'emballage (10), et à mettre fin à l'impulsion de gaz lorsqu'un deuxième bord (26) de l'emballage arrive sensiblement à la hauteur du moyen (18) d'amenée.

6. Appareil selon la revendication 5, **caractérisé en ce que** ledit poste immédiatement précédent est un poste de stérilisation qui, dans la direction d'indexage, comprend un poste (A) servant à fournir un agent de stérilisation, un poste (B) servant à fournir une lumière UV et un poste (C) servant à fournir de l'air chaud pour ventiler vers l'extérieur des résidus de l'agent de stérilisation.

7. Appareil selon la revendication 5, **caractérisé en ce que** ledit moyen (18) d'amenée comprend une première buse intérieure (30) et une deuxième buse extérieure (32) l'entourant, la buse intérieure (30) étant disposée de façon à fournir du gaz à une première vitesse et la buse extérieure (32) étant disposée de façon à fournir du gaz à une deuxième vitesse plus faible.

8. Appareil selon la revendication 7, **caractérisé en ce que** les deux buses (30, 32) sont tubulaires, **en ce que** la buse intérieure (30) est munie d'au moins un trou débouchant (34) à une certaine distance de l'embouchure de la buse intérieure, et **en ce qu'**une partie du gaz qui s'écoule à travers la buse intérieure (30) s'écoule à travers le trou jusqu'à la buse extérieure (32) et quitte le moyen (18) d'amenée par l'embouchure de la buse extérieure.

9. Appareil selon la revendication 5, **caractérisé en ce que** le moyen (18) d'amenée est disposé sur ou à proximité de la conduite (20) de remplissage de manière à faire passer l'emballage (10) devant le moyen (18) d'amenée avant de passer devant la conduite (20) de remplissage.

10. Appareil selon la revendication 5, **caractérisé en ce que** le gaz est du gaz azote.
